# EUROPEAN PATENT SPECIFICATION

(11) **EP 4 189 935 B1**
(45) Date of publication and mention of the grant of the patent: **22.04.2026**
(21) Application number: 21816222.0
(22) Date of filing: 26.10.2021
(51) Int. Cl.: H04L 41/5025, H04L 41/083, H04L 41/0895, H04L 41/40

(54) **PROACTIVE OPTIMIZATION ACROSS NETWORK SEGMENTS TO MAINTAIN END-TO-END PERFORMANCE**
PROAKTIVE OPTIMIERUNG ÜBER NETZWERKSEGMENTE HINWEG ZUR AUFRECHTERHALTUNG DER END-TO-END-LEISTUNG
OPTIMISATION PROACTIVE SUR DES SEGMENTS DE RÉSEAU POUR MAINTENIR UNE PERFORMANCE DE BOUT EN BOUT

(30) Priority: 21.01.2021 US 202163140224 P
(43) Date of publication of application: 07.06.2023
(73) Proprietor: VeloCloud Networks, LLC, Santa Clara, CA 95054 (US)
(72) Inventor: VIJAYAKUMAR, Goutham, Palo Alto, CA 94304 (US); SRINIVAS, Anand, Palo Alto, CA 94304 (US); ZAFER, Murtaza, Palo Alto, CA 94304 (US)
(74) Representative: Dilg, Haeusler, Schindelmann Patentanwaltsgesellschaft mbH
(86) International application number: PCT/US2021/056644
(87) International publication number: WO 2022/159156

(56) References cited:
- WO-A1-2020/091777
- US-A1- 2015 281 004
- US-A1- 2020 044 943
- ALSAEEDI MOHAMMED ET AL: "Toward Adaptive and Scalable OpenFlow-SDN Flow Control: A Survey", IEEE ACCESS, vol. 7, 1 August 2019 (2019-08-01), pages 107346 - 107379, XP011739964, DOI: 10.1109/ACCESS.2019.2932422

## Description

### BACKGROUND

Today, end-to-end network paths from devices in an enterprise to a server in the cloud consists of multiple network segments and silos such as wireless local area network (WLAN), wired LAN (e.g., switches, routers in the enterprise), wide area network (WAN) (e.g., the Internet), and server-side LAN. Each segment has strategies to dynamically change parameters to resolve network issues occurring in that segment. However, these strategies are reactive responses and fail to proactively prevent potentially poor network performance and bad user experience. In the cited background art, US2015/281004A1 describes a network management system configured to store a set of service-level agreements ("SLAs") associated with a subscriber; receive key performance indicator ("KPI") information for traffic that traverses one or more nodes of a network; forecast, based on the SLA information and the KPI information, a violation of the particular SLA; take corrective action, based on the forecasting; and output, to the subscriber, derived information based on the KPI information. WO2020091777A1 concerns modifying resource allocation or policy responsive to control information from a virtual network function.

### BRIEF SUMMARY

The present invention is defined according to the independent claims. Advantageous features are set out in the dependent claims. Any examples which are described but which do not fall within the scope of the claims are to be interpreted merely as being useful for a better understanding of the discussion herein. By way of introduction, the following description concerns a method for proactively optimizing network performance for a software-defined wide area network (SD-WAN) that connects multiple devices operating in multiple network segments during an active network flow (i.e., a current and active exchange of packets between a source and destination). The method monitors the SD-WAN for network events related to the active network flow (i.e., network events related to network elements associated with the active network flow). When a particular network event is detected at a first device in a first network segment in the SD-WAN, the method performs a proactive action on at least a second device in a second network segment in the SD-WAN that will be traversed by the active network flow in order to mitigate a potential negative impact of the particular network event on the performance of the SD-WAN to improve overall network performance.

In some examples, a central controller of the SD-WAN receives a signal from the first device indicating the particular network event was detected at the first device. The detected network event in some examples is a result of poor performance exhibited by a device other than the first device. For example, in some examples, the first device is an SD-WAN edge forwarding element, and the network event is a result of poor performance by a client device for which the SD-WAN edge forwarding element forwards packets. After receiving the signal, the central controller of some examples analyzes the signal, determines the proactive action to be implemented on at least the second device to improve performance for the active network flow, and signals to the second device to implement the proactive action.

The central controller collects metrics, in some examples, such as loss, delay, and jitter, from all of the devices in the SD-WAN, and uses these collected metrics to make additional determinations for improving overall network performance and user experience. These metrics in some examples are referred to as reactive metrics as they are collected following implementation of a proactive action. In some examples, at least some of the reactive metrics collected relate to a specific device for which a proactive action has been already been implemented and specify a degradation in performance of the specific device.

Suitably, control plane agents executing on each device in the SD-WAN implement a distributed control plane for monitoring the SD-WAN for network events and implementing proactive actions based on analyses of detected network events. Conveniently, the control plane agents communicate with each other control plane agent on each other device in the SD-WAN, forming a communications mesh. The control plane agents, in some examples, are configured to send and receive network-event related signals to and from each other. In some examples, the control plane agents use the received signals to make determinations on whether to modify their respective devices to improve device, and overall network, performance and mitigate additional potential network events.

The network event in some examples is a device-related network event, a local area network (LAN) -related event, a wide area network (WAN) -related event, or a wireless LAN (WLAN) -related network event. Examples of device-related network events of some examples include (1) poor device performance caused by bad behavior of an application operating on the device, (2) consistent poor performance through an intranet link, or (3) poor network, compute, and/or memory performance by the device. In some examples, examples of LAN-related and WAN-related network events include (1) device reboot (e.g., switch/router reboot), (2) a threshold warning from an environmental monitor (e.g., fan, supply, temperature, etc.), or (3) poor network, compute, and/or memory performance exhibited by the device. Examples of WLAN-related network events, in some examples, include (1) device roaming, (2) high interference (e.g., low signal-to-noise (SNR) ratio), (3) software downtime (e.g., for software upgrades), and (4) poor network, compute, and memory performance exhibited by the device.

In some examples, the proactive action varies based on network event type as well as device type (e.g., edge nodes, switches, edge gateways, etc.). Examples of proactive actions can include increasing quality of service (QoS) for network flows at other devices/points in the network (e.g., increasing QoS on an edge node to make up for an unreliable wireless device connection), selecting an alternate WAN link for forwarding a network flow, marking a network flow as a high priority flow (e.g., by setting a flag on packets of the flow), duplicating packets for the network flow, and proactively caching packets for one or more devices. In addition to the proactive actions, some examples also perform corrective actions on the devices that have experienced network events to prevent further network events on these devices and improve performance.

The preceding Summary is intended to serve as a brief introduction to some examples. It is not meant to be an introduction or overview of all subject matter disclosed in this document. The Detailed Description that follows and the Drawings that are referred to in the Detailed Description will further describe the examples described in the Summary as well as other examples. Accordingly, to understand all the examples described by this document, a full review of the Summary, the Detailed Description, the Drawings, and the Claims is needed. Moreover, the claimed subject matters are not to be limited by the illustrative details in the Summary, the Detailed Description, and the Drawings.

### BRIEF DESCRIPTION OF FIGURES

For purposes of explanation, several examples are set forth in the following figures.
**Figure 1** conceptually illustrates an example of an SD-WAN that connects multiple devices in multiple network segments to each other, to a controller, and to at least one cloud datacenter, according to some examples.
**Figure 2** conceptually illustrates a representation of the overall user experience, according to some examples.
**Figure 3** illustrates an example of an SD-WAN deployment with LAN/WLAN/device extended, according to some examples.
**Figure 4** illustrates a process for proactively mitigating poor network performance and optimizing user experience, according to some examples.
**Figure 5** illustrates a process for proactively optimizing network performance and mitigating additional potential network events in response to network events relating to a set of flows, a set of forwarding nodes, and/or a set of tenants, according to some examples.
**Figure 6** illustrates a process for optimizing network performance based on current metrics and metrics received over a period of time, according to some examples.
**Figure 7** illustrates a process for applying a proactive action at a device in the SD-WAN, according to some examples.
**Figure 8** illustrates a representation of a network event experienced in an SD-WAN deployment with LAN/WLAN/device extended, according to some examples.
**Figure 9** illustrates a process performed in response to receiving signals indicating poor outbound LAN/WLAN performance, in some examples.
**Figure 10** illustrates a process performed in response to receiving signals indicating poor inbound and outbound LAN/WLAN performance, in some examples.
**Figure 11** illustrates a process performed in response to receiving signals indicating poor outbound WAN performance, in some examples.
**Figure 12** illustrates a process performed in response to receiving signals indicating poor device performance, in some examples.
**Figure 13** conceptually illustrates a computer system with which some examples are implemented.

### DETAILED DESCRIPTION

In the following detailed description, numerous details and examples are set forth and described. However, it will be clear and apparent to one skilled in the art that the discussion is not limited to the examples set forth and that the techniques may be practiced without some of the specific details and examples discussed.

Some examples provide a method for proactively optimizing network performance for a software-defined wide area network (SD-WAN) that connects multiple devices operating in multiple network segments during an active network flow (i.e., a current and active exchange of packets between a source and destination). The method monitors the SD-WAN for network events related to the active network flow. When a particular network event is detected at a first device in a first network segment in the SD-WAN, the method performs a proactive action on at least a second device in a second network segment in the SD-WAN that will be traversed by the active network flow in order to mitigate a potential negative impact of the particular network event on the performance of the SD-WAN to improve overall network performance.

In some examples, a central controller of the SD-WAN receives a signal from the first device indicating the particular network event was detected at the first device. The detected network event in some examples is a result of poor performance exhibited by a device other than the first device. For example, in some examples, the first device is an SD-WAN edge forwarding element, and the network event is a result of poor performance by a client device for which the SD-WAN edge forwarding element forwards packets. After receiving the signal, the central controller of some examples analyzes the signal, determines the proactive action to be implemented on at least the second device to improve performance for the active network flow, and signals to the second device to implement the proactive action.

The central controller collects metrics, in some examples, such as loss, delay, and jitter, from all of the devices in the SD-WAN, and uses these collected metrics to make additional determinations for improving overall network performance and user experience. These metrics in some examples are referred to as reactive metrics as they are collected following implementation of a proactive action. In some examples, at least some of the reactive metrics collected relate to a specific device for which a proactive action has been already been implemented and specify a degradation in performance of the specific device.

Control plane agents executing on each device in the SD-WAN implement a distributed control plane in some examples for monitoring the SD-WAN for network events and implementing proactive actions based on analyses of detected network events. According to the invention the control plane agents communicate with each other control plane agent on each other device in the SD-WAN, forming a communications mesh. The control plane agents, in some examples, are configured to send and receive network-event related signals to and from each other. In some examples, the control plane agents use the received signals to make determinations on whether to modify their respective devices to improve device, and overall network, performance and mitigate additional potential network events.

The network event in some examples is a device-related network event, a local area network (LAN) -related event, a wide area network (WAN) -related event, or a wireless LAN (WLAN) -related network event. Examples of device-related network events of some examples include (1) poor device performance caused by bad behavior of an application operating on the device, (2) consistent poor performance through an intranet link, or (3) poor network, compute, and/or memory performance by the device. In some examples, examples of LAN-related and WAN-related network events include (1) device reboot (e.g., switch/router reboot), (2) a threshold warning from an environmental monitor (e.g., fan, supply, temperature, etc.), or (3) poor network, compute, and/or memory performance exhibited by the device. Examples of WLAN-related network events, in some examples, include (1) device roaming, (2) high interference (e.g., low signal-to-noise (SNR) ratio), (3) software downtime (e.g., for software upgrades), and (4) poor network, compute, and memory performance exhibited by the device.

In some examples, the proactive action varies based on network event type as well as device type (e.g., edge nodes, switches, edge gateways, etc.). Examples of proactive actions can include increasing quality of service (QoS) for network flows at other devices/points in the network (e.g., increasing QoS on an edge node to make up for an unreliable wireless device connection), selecting an alternate WAN link for forwarding a network flow, marking a network flow as a high priority flow (e.g., by setting a flag on packets of the flow), duplicating packets for the network flow, and proactively caching packets for one or more devices. In addition to the proactive actions, some examples also perform corrective actions on the devices that have experienced network events to prevent further network events on these devices and improve overall network performance.

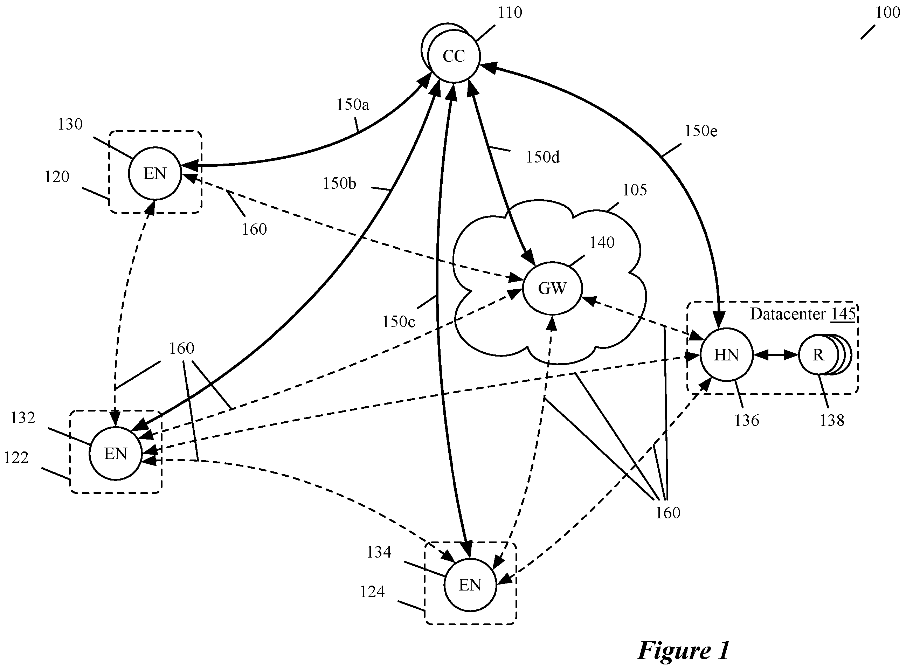

**Figure 1** illustrates an example example of an SD-WAN (also referred to herein as a virtual network) that connects multiple devices in multiple network segments to each other, to a controller, and to at least one cloud datacenter. As shown, the SD-WAN 100 includes a controller 110 (i.e., CC 110), three branch sites 120-124 that each include an edge node 130-134 (i.e., EN 130, EN 132, and EN 134), a gateway 140 (i.e., GW 140) in a public cloud datacenter 105, and a datacenter (public or private) 145 that includes a hub node 136 (i.e., HN 136) and a set of resources 138.

The edge nodes 130-134 in some examples are edge machines (e.g., virtual machines (VMs), containers, programs executing on computers, etc.) and/or standalone appliances that operate at multi-computer locations of the particular entity (e.g., at an office or datacenter of the entity) to connect the computers at their respective locations to other nodes, hubs, etc. in the virtual network. In some examples, the edge nodes are clusters of nodes at each of the branch sites. In other examples, the edge nodes are deployed to each of the branch sites as high-availability pairs such that one node in the pair is the active node and the other node in the pair is the standby node that can take over as the active node in case of failover. Each of the branch sites and datacenter, in some examples, are geographically dispersed across different physical locations (e.g., different buildings, different cities, different states, etc.).

An example of an entity for which such a virtual network can be established includes a business entity (e.g., a corporation), a non-profit entity (e.g., a hospital, a research organization, etc.), and an education entity (e.g., a university, a college, etc.), or any other type of entity. Examples of public cloud providers include Amazon Web Services (AWS), Google Cloud Platform (GCP), Microsoft Azure, etc., while examples of entities include a company (e.g., corporation, partnership, etc.), an organization (e.g., a school, a non-profit, a government entity, etc.), etc. In other examples, hubs like the hub node 136 can also be deployed in private cloud datacenters of a virtual WAN provider that hosts hubs to establish SD-WANs for different entities.

In the example SD-WAN 100, the hub 136 is a multi-tenant forwarding element that is deployed on the premises of the datacenter 145. The hub 136 can be used to establish secure connection links (e.g., tunnels) with edge nodes at the particular entity's multi-computer sites, such as branch sites 120-124, third party datacenters (not shown), etc. For example, the hub 136 can be used to provide access from each branch site 120-124 to each other branch site 120-124 (e.g., via any of the connection links 160 that terminate at the hub 136) as well as to the resources 138 of the datacenter 145. These multi-computer sites are often at different physical locations (e.g., different buildings, different cities, different states, etc.), according to some examples. In some examples, hubs can be deployed as physical nodes or virtual nodes. Additionally, hubs in some examples can be deployed on a cloud (e.g., as a set of virtual edges configured as a cluster).

In the SD-WAN 100, the hub 136 also provides access to the resources 138 of the datacenter 145 as mentioned above. The resources in some examples include a set of one or more servers (e.g., web servers, database servers, etc.) within a microservices container (e.g., a pod). Conjunctively, or alternatively, some examples include multiple such microservices containers, each accessible through a different set of one or more hubs of the datacenter (not shown). The resources, as well as the hubs, are within the datacenter premises, according to some examples. While not shown, some examples include multiple different SaaS datacenters, which may each be accessed via different sets of hubs, according to some examples. In some examples, the SaaS datacenters include datacenters for video conferencing SaaS providers, for middlebox (e.g., firewall) service providers, for storage service providers, etc.

Additional examples of resources accessible via the hub 136, in some examples, include compute machines (e.g., virtual machines and/or containers providing server operations), storage machines (e.g., database servers), and middlebox service operations (e.g., firewall services, load balancing services, encryption services, etc.). In some examples, the connections 160 between the branch sites 120-124, the gateway 140, and the hub 136 are secure encrypted connections that encrypt packets exchanged between the edge nodes 130-134 of the branch sites and the hub 136. Examples of secure encrypted connections used in some examples include VPN (virtual private network) connections, or secure IPsec (Internet Protocol security) connection.

In some examples, multiple secure connection links (e.g., multiple secure tunnels) can be established between an edge node and the hub 136. When multiple such links are defined between a node and a hub, each secure connection link, in some examples, is associated with a different physical network link between the node and an external network. For instance, to access external networks in some examples, a node has one or more commercial broadband Internet links (e.g., a cable mode and a fiber optic link) to access the Internet, a wireless cellular link (e.g., a 5G LTE network), etc. The collection of the edge nodes, hub, gateway, controller, and secure connections between the edge nodes, hub, gateway, and controller form the SD-WAN 100.

The controller 110 in some examples communicates with each of the edge nodes 130-134 to send information such as configuration information and to receive information such as metrics relating to device and/or network performance via the connection links 150a-150c. In addition to communicating with the edge nodes 130-134, the controller 110 in some examples also communicates with the gateway 140 via the connection link 150d and the hub 136 via the connection link 150e to provide information (e.g., configuration information) and receive performance-related metrics. While illustrated as individual connection links, the links 150a-150e are sets of multiple connection links in some examples.

In some examples, devices in the SD-WAN are configured to provide metrics relating to device and network performance to a controller (or controller cluster) of the SD-WAN, and to send signals that indicate imminent negative network experience in a portion of the network. The metrics, in some examples, include loss, delay, and jitter, and are used to calculate other metrics such as the performance of a link. These metrics in some examples are referred to as reactive metrics as they are collected following implementation of a proactive action. In some examples, at least some of the reactive metrics collected relate to a specific device for which a proactive action has been already been implemented and specify a degradation in performance of the specific device. The signals that indicate imminent negative network experience, in some examples, can include signals relating to WLAN issues, LAN issues, WAN issues, and device issues.

Examples of WLAN issues that can be monitored in some examples include device roaming (e.g., due to loss of connectivity with an access point), high interference (e.g., low SNR), software reboot (e.g., due to upgrade, maintenance, failure, etc.), and poor network, compute, and/or memory performance (e.g., CPU, RAM, network speed, port errors, etc.). Examples of LAN and WAN issues that can be monitored in some examples include router or switch reboot (e.g., due to upgrades, maintenance, failures, etc.), threshold warnings from environmental monitors (e.g., fan, supply, temperature, etc.), and poor network, compute, and/or memory performance (e.g., CPU, RAM, network speed, port errors, etc.). Lastly, examples of device issues that can be monitored include consistently poor device performance caused by bad application behavior, consistently poor performance (e.g., throughput, loss) on the intranet link, and poor network, compute, and memory performance indicated by device syslogs.

The controller in some examples receives metrics and signals from devices in the SD-WAN in real-time as an active packet flow traverses the SD-WAN, and makes determinations for optimizing network performance and overall user experience, as well as mitigating potential network events, based on these metrics and signals. In some examples, the controller can make these determinations and implement actions based on these determinations before a network flow is even completed.

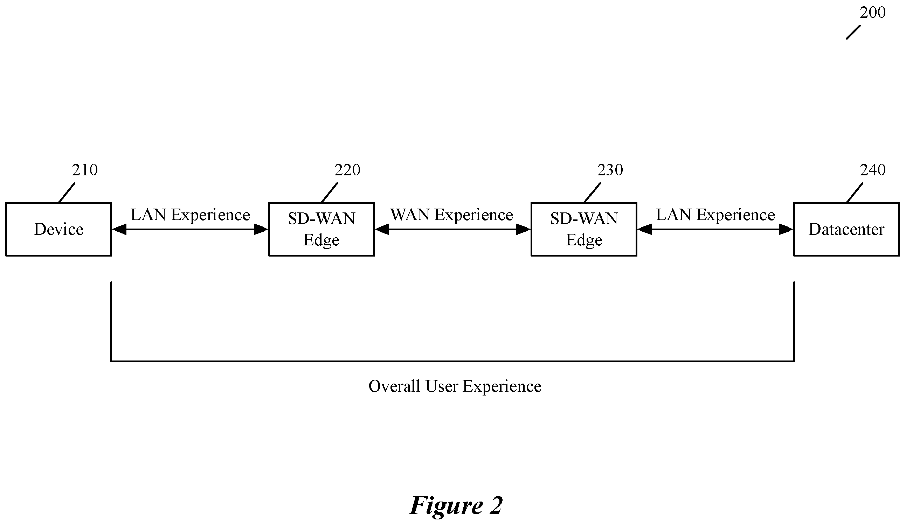

In some examples, overall user experience can be defined as a sum of user experiences on the internet and intranet. **Figure 2****,** for instance, illustrates a representation of this overall user experience in some examples. The representation 200 from left to right includes a device 210, a first edge node 220, a second edge node 230, and a datacenter 240. The connections between the device 210 and the first edge node 220, and between the datacenter 240 and the second edge node 230, are labeled as LAN experience, as shown, while the connection between the edge nodes 220 and 230 is labeled as WAN experience.

The LAN experience, in some examples, is the combined network experience on the LAN and WLAN, and the WAN experience is the network experience on the WAN. Thus, the overall user experience, in some examples, is the sum of the enterprise LAN experience, the WAN experience, and the datacenter LAN experience (i.e., end-to-end). Accordingly, the controller in some examples can, for example, increase and optimize WAN performance in response to detecting poor WLAN/LAN performance. Examples of the types of proactive and corrective actions taken by the controller in some examples in response to the different types of network events will be described in further detail below.

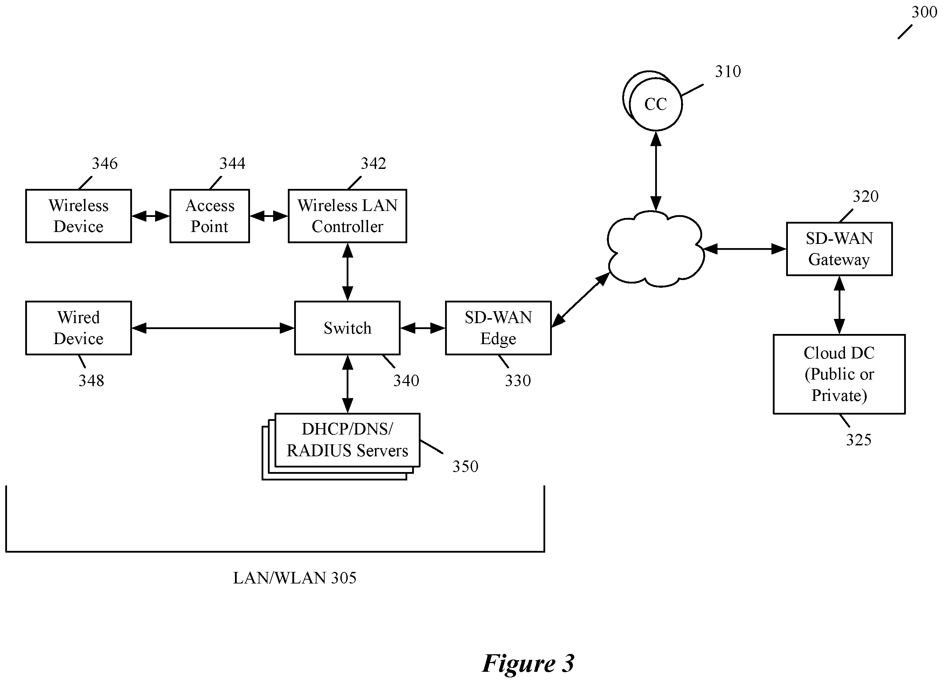

**Figure 3** illustrates an example example of an SD-WAN deployment with LAN/WLAN/device extended. The SD-WAN 300 is comprised of a controller cluster 310, a gateway 320, a cloud datacenter 325, and an edge node 330 for the LAN/WLAN 305.

In addition to the other functionalities described herein, the controller cluster 310 in some examples serves as a central point for managing (e.g., defining and modifying) configuration data that is provided to the edge nodes and/or gateways to configure some or all of the operations. In some examples, the controller cluster 310 has a set of manager servers that define and modify the configuration data, and a set of controller servers that distribute the configuration data to the edge forwarding elements and/or gateways. In some examples, the controller cluster 310 directs edge forwarding elements to use certain gateways (i.e., assigns a gateway to the edge forwarding elements).

The controllers in some examples reside in multiple different public cloud datacenters and/or in a private cloud datacenter. Also, some examples deploy one or more gateways in one or more private cloud datacenters, e.g., datacenters of the entity that deploy the gateways and provide the controllers for configuring the gateways to implement virtual networks.

The edge node 330 may be an edge machine (e.g., a VM, container, program executing on a computer, etc.) and/or a standalone appliance that operates at the LAN to connect other devices at the LAN/WLAN 305 to other nodes, hubs, etc. in the virtual network, such as to the cloud datacenter 325 via the gateway 320. The LAN/WLAN 305 includes a switch 340, wireless LAN controller 342, access point 344, wireless device 346, wired device 348, and servers 350. The servers 350 can include DHCP (dynamic host configuration protocol) servers, DNS (domain name system) servers, and RADIUS (Remote Authentication Dial-In User Service) servers, according to some examples.

While the edge node 330 connects the devices of the LAN/WLAN to external networks and devices (e.g., cloud datacenter 325), the switch 340 connects the edge node 330, wireless LAN controller 342, wired device 348, and servers 350 to each other. The wireless LAN controller 342 manages access points such as the access point 344 through which wireless devices including wireless device 346 connect to the LAN 305. For example, a packet originating from the wireless device 346 and destined for the cloud datacenter 325 would follow a path through the access point 344, wireless LAN controller 342, switch 340, edge node 330, across the SD-WAN to the edge gateway 320, and finally to the cloud datacenter 325.

As described above, the devices of the SD-WAN in some examples are configured to signal to the controller when a network event has been detected so that the controller can attempt to mitigate potential issues before they happen, as well as to optimize network performance and improve overall user experience, before a flow is even completed. Additionally, as signals are monitored for extended durations of time, some examples derive other insights relating to network performance and overall user experience. Examples of SD-WAN devices that can monitor and collect data for the centralized controller include SD-WAN edge nodes (e.g., by streaming collected metrics), wireless controllers and/or switches (i.e., using simple network management protocol (SNMP)), RADIUS servers (e.g., using syslogs), and applications and/or agents running on client devices or servers (e.g., via APIs (application programming interfaces)). Alternatively, or conjunctively, some examples implement an on-premise device to collect data from multiple data sources, and send this data to the centralized controller.

The on-premise device in some examples is a crawler and may be a standalone device, virtual machine (VM), or built into an SD-WAN edge device. In some examples, the crawler device is located in a central datacenter (e.g., datacenter 105) or in branch locations (e.g., branch sites 120-124). Multiple crawler devices can work together in some examples to collect data as well as deduplicate any overlapping data. As with the other devices described above, the crawler devices can collect data from various devices such as switches, routers, WLAN controllers, RADIUS servers, applications, etc., which is then provided to the centralized controller.

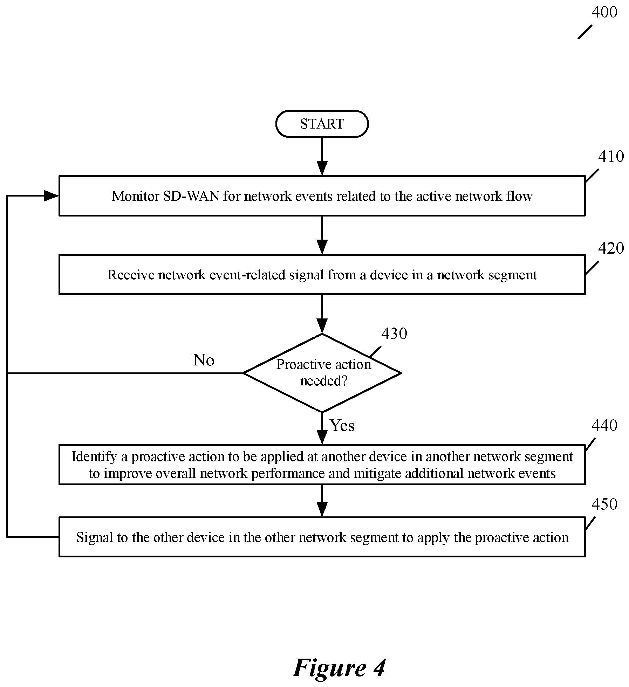

**Figure 4** illustrates a process performed in some examples to proactively optimize network performance and mitigate additional potential network events during an active network flow. In some examples, the process 400 is performed by a centralized controller or controller cluster, while according to the invention, the process 400 is performed by a distributed controller with agents deployed in the SD-WAN in a full or partial mesh.

The process 400 starts at 410 by monitoring the SD-WAN for network events related to network elements associated with an active network flow. In some examples, the network elements can include forwarding elements (e.g., edge forwarding nodes, hub forwarding nodes, etc.), middlebox service elements (e.g., firewall service elements, load balancing service elements, encryption service elements, etc.), and source and destination devices (e.g., client computers). Also in some examples, the network elements can include datacenters or network providers through which the flow traverses, while in other examples, the network elements do not include the datacenters or network providers.

In some examples, when the process 400 is performed by a centralized controller, the centralized controller listens for signals from devices (e.g., edge nodes, hubs, gateways, etc.) along the path traversed by the active network flow. Alternatively, when the process 400 is instead performed by a distributed controller, the agents deployed by the distributed controller each listen for signals from other agents indicating anomalies detected by the other agents, in some examples.

Next, the process receives (at 420) a signal relating to a network event from a device in a network segment. For example, in some examples when a centralized controller performs the process 400, the centralized controller receives the signal from the device indicating detection of the network event. Alternatively, when a distributed controller performs the process 400, multiple agents on multiple different devices can receive the signal from another agent indicating detection of the network event. Examples of network events for which devices and/or agents send signals include (1) device reboot (e.g., switch/router reboot), (2) a threshold warning from an environmental monitor (e.g., fan, supply, temperature, etc.), (3) poor device performance (e.g., network, compute, and/or memory performance), (4) device roaming, (5) high interference (e.g., low signal-to-noise (SNR) ratio), and (6) software downtime (e.g., for software upgrades, scheduled maintenance, etc.).

After receiving the network event-related signal, the process determines at 430 whether a proactive action is needed to mitigate additional network events and/or optimize performance to make up for any delays caused by the network event. When the process determines (at 430) that no proactive action is needed, the process returns to 410 to monitor the SD-WAN for network events related to the active network flow. Otherwise, when the process determines (at 430) that proactive action is needed, the process transitions to 440 to identify a proactive action to be applied at another device in another network segment to improve overall network performance and mitigate additional potential network events.

Once the proactive action and other device to apply the proactive action have been identified, the process 400 signals (at 450) to the other device in the other network segment to apply the proactive action. For example, when the centralized controller in some examples receives a signal indicating poor device performance, the controller can identify an edge node in the path of the active network flow and direct the edge node to boost QoS for the active network flow. Similarly, an agent deployed at an edge node can receive the signal from another agent, determine whether the edge node is along the path of the active network flow, and direct the edge node to boost QoS for the active network flow when needed, according to some examples. Following 450, the process 400 returns to 410 to continue monitoring the SD-WAN for network events related to the active network flow.

In some examples, a user (e.g., network administrator) can specify a group or groups of users, network flows, network segments, and/or devices to monitor for network events. For instance, a network administrator at a hospital can specify groups of critical medical devices to be monitored for network events to ensure optimized network and device performance. In a centralized case, the devices in the groups specified for monitoring would pass performance data to a controller (e.g., controller 310) that would determine if and what proactive and/or corrective actions would be needed to ensure optimized performance. In the distributed case, the network administrator deploys agents to each of the medical devices for the agents to form a communications mesh, as described above, for passing performance data to each other to use to identify potential device modifications based on weaknesses detected at other devices in some examples.

While the steps of the process 400 are described for an active flow between a source and destination such that the flow has not previously terminated, other examples may analyze non-active flows. For example, some examples analyze previously terminated flows, and/or flows that were active when the monitoring process started, but subsequently ended before the monitoring process could perform any proactive actions.

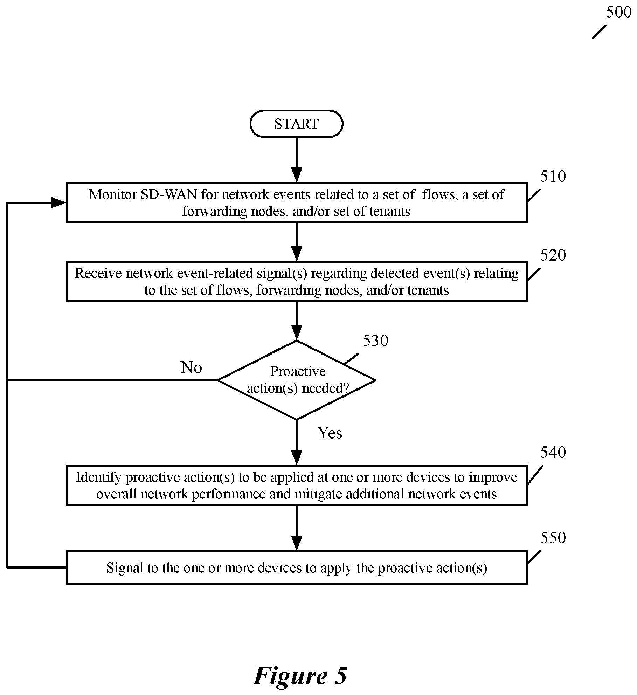

**Figure 5** illustrates a process 500 of some examples for proactively optimizing network performance and mitigating additional potential network events in response to network events relating to a set of flows, a set of forwarding nodes, and/or a set of tenants. Like the process 400 described above, the process 500 in some examples can be implemented by a centralized controller or a distributed controller. The process 500 starts, at 510, by monitoring the SD-WAN for network events related to the set of flows, set of forwarding nodes, and/or set of tenants. For example, a network administrator at a hospital can select to monitor a set of medical devices that provide critical patient information, according to some examples.

Next, the process receives, at 520, network event-related signal(s) regarding detected event(s) relating to the set of flows, forwarding nodes, and/or tenants. In some examples, the received network event-related signals can relate to a single flow, forwarding node, and/or tenant from the monitored set(s) (e.g., a single device experiencing connection issues), or alternatively relate to two or more flows, forwarding nodes, and/or tenants from the monitored set(s) (e.g., packet loss experienced at multiple points along a path traversed by a particular flow).

In response to receiving the network event-related signal(s), the process determines at 530 whether proactive action is needed. When the process determines that proactive action is not needed, the process returns to 510 to continue monitoring the SD-WAN for signals. Otherwise, when the process determines at 530 that proactive action is needed, the process transitions to 540 to identify one or more proactive actions to be applied at one or more devices to improve the overall network performance and mitigate additional potential network events. Examples of proactive actions in some examples can include increasing QoS, caching packets for a particular device, and selecting an alternate link on which to forwarding packets.

After identifying the proactive action(s) to be applied at the one or more devices, the process then signals at 550 to the one or more devices to apply the proactive action(s). The process then returns to 510 to monitor the SD-WAN for network events related to the set of flows, forwarding nodes, and/or tenants.

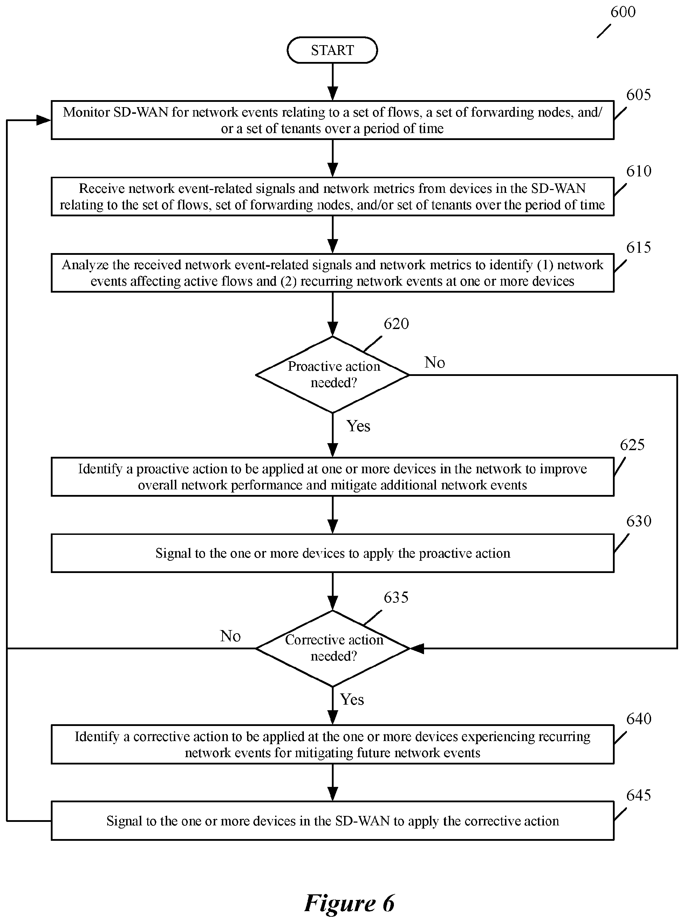

**Figure 6** illustrates a process 600 for optimizing network performance based on real-time metics (i.e., metrics received for an active flow or flows) and metrics collected and received over a period of time (e.g., hours, days, etc.). Like the processes 400 and 500 described above, process 600 can be performed by a centralized controller or a distributed controller, according to some examples.

Process 600 starts, at 605, by monitoring the SD-WAN for network events relating to a set of flows, a set of forwarding nodes, and/or a set of tenants over a period of time. At 610, the process 600 receives network event-related signals and network metrics from devices in the SD-WAN relating to the set of flows, set of forwarding nodes, and/or set of tenants over the period of time. The metrics, in some examples, include reactive metrics regarding patent loss, latency, and jitter. In some examples, at least some of the metrics collected relate to a device for which a proactive action has been already been implemented.

Next, the process analyzes, at 615, the received network event-related signals and network metrics to identify any network events affecting the active flow, as well as recurring network events at one or more devices as indicated by the metrics from the period of time. An example of a network event affecting the active flow can include a switch or router reboot, while an example of a recurring network event could include a faulty link frequently experiencing packet loss in some examples.

Based on the analysis in 615, the process 600 determines, at 620, whether a proactive action is needed based on the received network event-related signals. When the process determines that no proactive action is needed, the process transitions to 635 to determine if a corrective action is needed in response the received network metrics. Otherwise, when the process determines at 620 that proactive action is needed, the process transitions to 625 to identify a proactive action (or actions) to be applied at one or more devices in the network to improve overall network performance and mitigate additional potential network events. The process 600 then signals, at 630, to the one or more devices to apply the proactive action(s).

The process 600 next determines, at 635, whether corrective action is needed in response to any identified recurring network events. When the process 600 determines that no corrective action is needed, the process transitions back to 605 to monitor the SD-WAN. Otherwise, when the process determines at 635 that corrective action is needed, the process transitions to 640 to identify a corrective action (or actions) to be applied at the one or more devices experiencing recurring network events in order to mitigate future network events. For example, if a particular network flow experiences frequent packet loss on a particular link, the corrective action can include finding an alternate link for the particular network flow, in some examples.

After identifying the corrective action at 640, the process signals, at 645, to the one or more devices to apply the corrective action. The process 600 then transitions back to 605 to monitor the SD-WAN. In some examples, corrective actions are applied based on reactive metrics (e.g., jitter, loss, delay, etc.) collected from devices in the SD-WAN after one or more proactive actions have been implemented. Using the packet loss example above, in some examples, the controller receives metrics from devices in the SD-WAN after applying the proactive action, and, based on the received metrics, determines that additional action, in the form of a corrective action, is needed to mitigate additional packet loss due and further improve overall network performance.

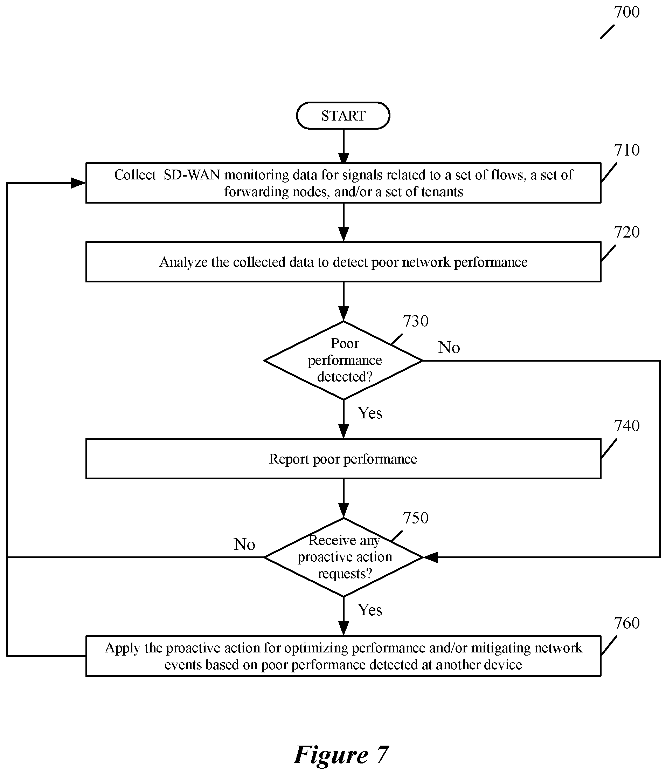

**Figure 7** illustrates a process 700 performed by a non-controller device in the SD-WAN that has been identified for applying a proactive action, according to some examples. While the process 700 will be described for a set of flows, a set of forwarding nodes, and/or a set of tenants, some examples implement the process 700 for a single flow, forwarding node, and/or tenant.

The process 700 starts, at 710, by collecting SD-WAN monitoring data for signals related to a set of flows, a set of forwarding nodes, and/or a set of tenants. For example, an SD-WAN edge node can collect monitoring data relating to a set of flows. The process 700 then analyzes, at 720, the collected data to detect poor network performance relating to the set of flows, set of forwarding nodes, and/or set of tenants.

At 730, the process determines whether any poor performance is detected based on the analysis of the collected data. If no poor performance is detected, the process transitions to 750 to determine if any proactive action requests have been received. Otherwise, when the process determines at 730 that poor performance is detected, the process transitions to 740 to report the poor performance. For example, the SD-WAN edge node can determine that a particular client device is exhibiting poor performance, and signal to a centralized controller to indicate the poor performance of the particular client device to allow the centralized controller to determine whether proactive action is needed (e.g., as described by processes 400, 500, and 600).

Next, the process 700 determines at 750 whether any proactive action requests have been received. In some examples, the proactive action can be received from a centralized controller or from a distributed controller (i.e., an agent of the distributed controller). When the process 700 determines that no proactive action requests have been received, the process transitions back to 710 to collect SD-WAN monitoring data. Otherwise, when the process determines at 750 that at least one proactive action request has been received, the process transitions to 760 to apply the proactive action for optimizing overall network performance and/or for mitigating potential network events based on poor performance detected at another device. Following 760, the process returns to 710 to collect SD-WAN monitoring data.

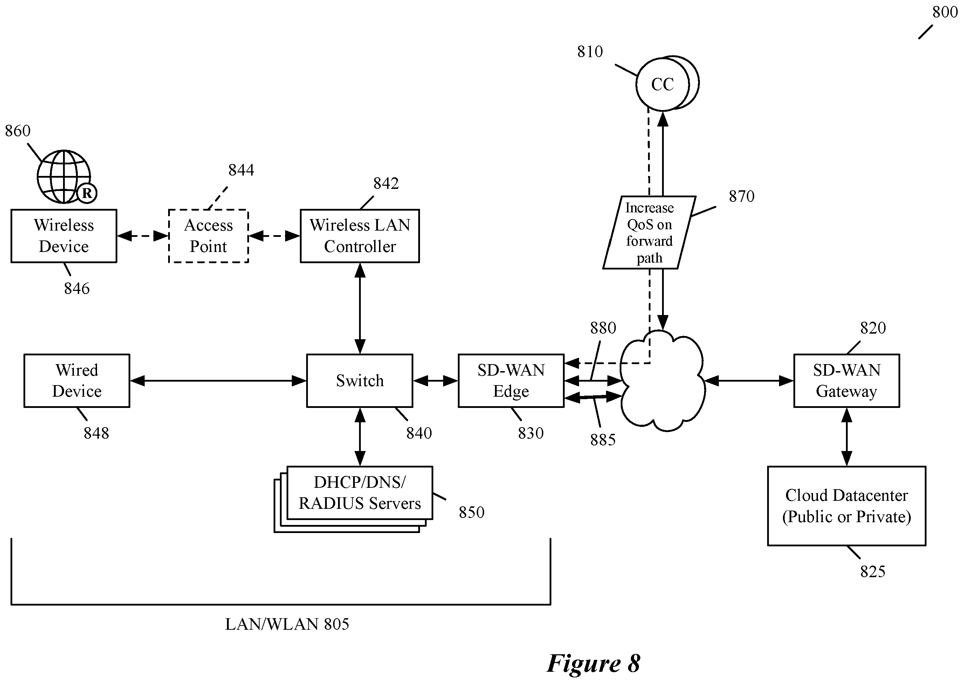

**Figure 8** illustrates a network event experienced in an SD-WAN deployment with LAN/WLAN/device extended. Like the SD-WAN 300, the SD-WAN 800 is comprised of a controller cluster 810, a gateway 820, a cloud datacenter 825, and an edge node 830 for the LAN/WLAN 805. The LAN/WLAN 805 is comprised of a switch 840, wireless LAN controller 842, access point 844, wireless device 846, wired device 848, and servers 850.

In this example, the access point 844 and the connection between the access point 844 and wireless device 846 are each shown with dashed borders indicating the access point, and the wireless device's connection to the access point, are unavailable. As a result, the wireless device 846 is shown with an accompanying roaming symbol 860 to indicate the device is roaming. In some examples, the loss of connectivity between the wireless device 846 and the access point 844 results in loss of data requiring retransmits and causes a delay due to packets being queued up on the wireless device 846 while the new session is established.

As described above, the controller 810 monitors the SD-WAN for signals regarding performance-related network events, according to some examples. When the controller 810 receives a signal indicating the wireless device 846 is roaming due to loss of connectivity between the wireless device 846 and the access point 844, the controller in some examples determines if and what proactive actions are needed based on the type of network event and where it occurred.

In the example SD-WAN 800, the controller 810 sends instructions 870 to the edge node 830 to direct the edge node to select an alternate WAN link that has a higher throughput for some packets from the wireless device 846. For example, the SD-WAN edge 830 includes a set of WAN links 880 and 885. To represent its higher throughput, the link 885 appears bolder than the link 880. Accordingly, in response to the instructions 870 from the controller cluster 810, the edge node 830 would select the link 885 to forward at least some packets originating from the wireless device 846. In some examples, the controller sends the instructions 870 to every device through which a packet flow from the wireless device 846 may traverse, such as the gateway 820.

Alternatively, or conjunctively, the controller in some examples can instruct the edge node 830 to increase QoS on the forward path for packets from the wireless device 846 in response to detecting that the device is roaming, and/or instruct the datacenter LAN to prioritize affected flows on the path to application servers (not shown). In each instance, the proactive action provides at least a temporary boost to the performance of the wireless device 846.

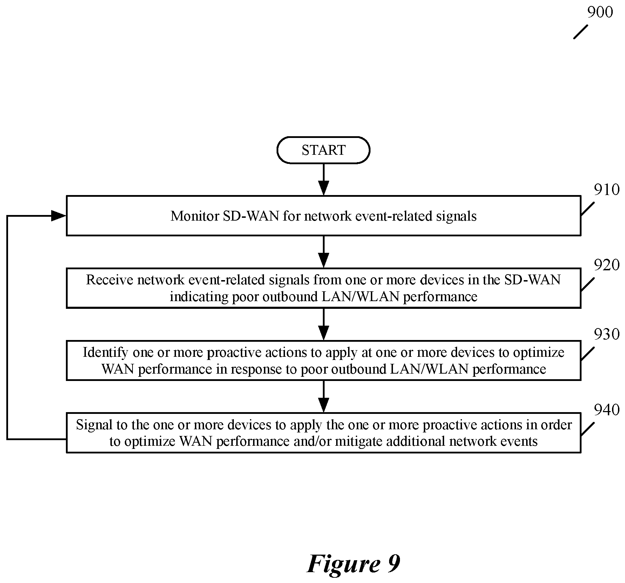

**Figures 9-12** illustrate a set of processes performed by a centralized controller or distributed controller in some examples for optimizing overall network performance in response to different types of network events. **Figure 9** illustrates a process 900 performed by the centralized or distributed controller in some examples when the network event indicates poor outbound LAN/WLAN performance.

The process 900 starts, at 910, by monitoring the SD-WAN for network event-related signals. At 920, the process receives network event-related signals from one or more devices in the SD-WAN indicating poor outbound LAN/WLAN performance. For example, like in the example of **Figure 8****,** the controller in some examples receives signals indicating loss of connection between a wireless device and an access point.

In response to receiving the signals indicating poor outbound LAN/WLAN performance, the process identifies, at 930, one or more proactive actions to apply at one or more devices to optimize WAN performance to make up for poor outbound LAN/WLAN performance. As describe in the example of **Figure 8****,** the controller in some examples can instruct devices, such as SD-WAN edge nodes, to increase QoS on the forward path for packets from the wireless device, and/or to select an alternate WAN link that has a higher throughput for some packets from the wireless device. Alternatively, or conjunctively, the controller can instruct the datacenter LAN to prioritize affected flows on the path to application servers.

Following 930, the process 900 signals, at 940, to the one or more devices to apply the one or more proactive actions in order to optimize WAN performance and/or mitigate additional potential network events. The process 900 then transitions back to 900 to continue monitoring the SD-WAN for network event-related signals.

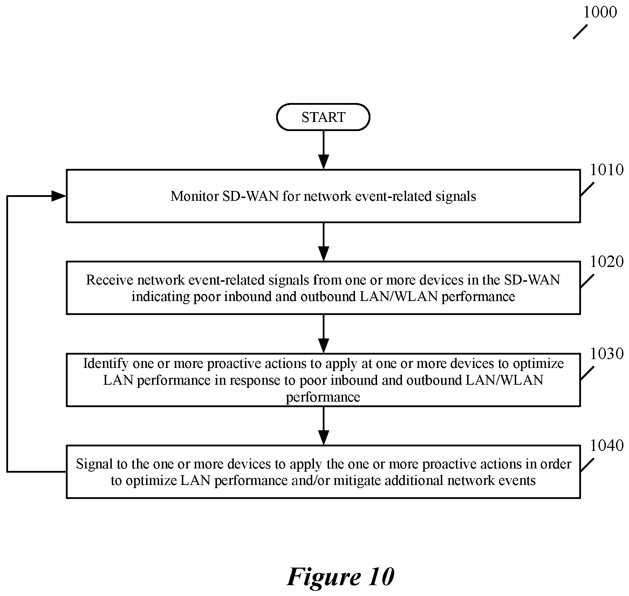

**Figure 10** illustrates a process 1000 performed by the centralized or distributed controller in some examples when the network event indicates poor inbound and outbound LAN/WLAN performance. The process 1000 starts, at 1010, by monitoring the SD-WAN for network event-related signals. The process then receives, at 1020, network event-related signals from one or more devices in the SD-WAN indicating poor inbound and outbound LAN/WLAN performance. Examples of inbound and outbound LAN/WLAN issues can include device roam, high interference, switch and/or software reboot, etc.

In response to receiving the signals indicating poor inbound and outbound LAN/WLAN performance, the process 1000 identifies, at 1030, one or more proactive actions to apply at one or more devices to optimize LAN performance. For example, the controller can (1) instruct the LAN/WLAN to increase QoS for the flow experiencing issues to ensure packets of the flow get a boost, (2) instruct an edge node to duplicate packets on the LAN to avoid retransmit flows caused by drops, (3) instruct an edge node to proactively cache packets meant for a device or device group experiencing LAN/WLAN issues, and only transmit them back on retransmit requests, (4) instruct the LAN network for a datacenter to prioritize affected network flows on the path to application servers, and (5) instruct the LAN on another edge node that the network flow traverses to prioritize the network flow.

The process 1000 next signals, at 1040, to the one or more devices to apply the one or more proactive actions in order to optimize LAN performance and/or mitigate additional potential network events. The process then returns to 1010 to continue to monitor the SD-WAN for network event-related signals.

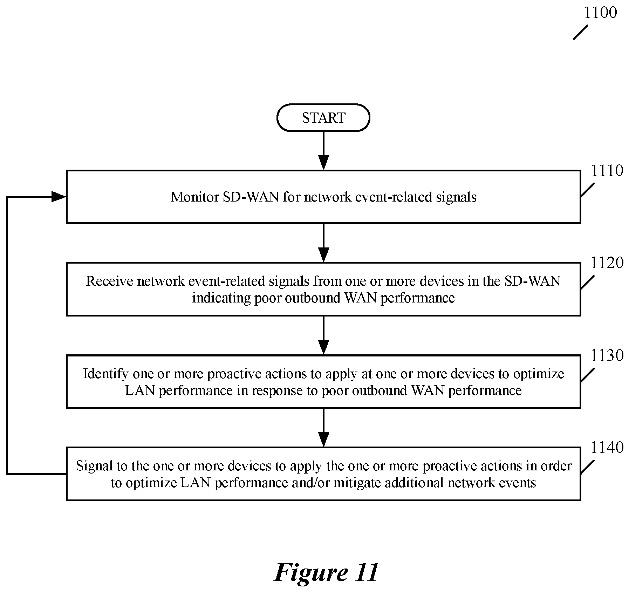

**Figure 11** illustrates a process 1100 performed by the centralized or distributed controller in some examples when the network event indicates poor outbound WAN performance. The process 1100 starts, at 1110, by monitoring the SD-WAN for network event-related signals. The process then receives, at 1120, network event-related signals from one or more devices indicating poor outbound WAN performance. For example, the signals can indicate router reboot (i.e., due to software upgrade, maintenance, failure, etc.), a threshold warning from environmental monitors (e.g., fan, supply, temperature, etc.), and/or poor network, compute, and memory performance, according to some examples.

In response to the received signals, the process 1100 identifies, at 1130, one or more proactive actions to apply at one or more devices to optimize LAN performance based on the detected poor outbound WAN performance. Examples of proactive actions for optimizing LAN performance can include increasing QoS for the active flow to ensure packets receive a boost, and/or prioritizing affected flows by the datacenter LAN on the path to application servers, in some examples.

After the one or more proactive actions have been identified, the process 1100 then signals, at 1140, to the identified one or more devices to apply the proactive action(s) in order to optimize LAN performance and/or mitigate additional potential network events. The process 1100 then returns to 1110 to continue to monitor the SD-WAN.

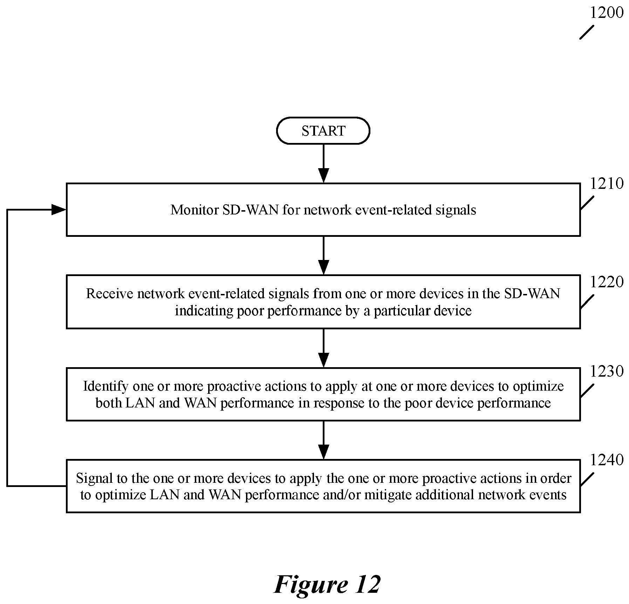

**Figure 12** illustrates a process 1200 performed by the centralized or distributed controller in some examples when the network event indicates poor device performance. The process 1200 starts, at 1210, by monitoring the SD-WAN for network event-related signals. The process then receives, at 1220, network event-related signals from one or more devices indicating poor performance by a particular device. For example, the signals can indicate consistently poor performance on the device caused bad application behavior, consistently poor performance (e.g., with regard to throughput and loss) in an intranet link, and/or poor network, compute, and/or memory performance based on device syslogs.

Based on the received signals, the process identifies, at 1230, one or more proactive actions to apply at one or more devices to optimize LAN and WAN performance based on the detected poor device performance. The proactive action in response to poor device performance can include adjusting QoS on the LAN, WLAN, and WAN, allowing for delivery of a better user experience regardless of the device's performance.

After 1230, the process then signals, at 1240, to the one or more devices to apply the one or more proactive actions in order to optimize LAN and WAN performance and/or mitigate additional potential network events. The process 1200 then returns to 1210 to monitor the SD-WAN for network event-related signals.

Many of the above-described features and applications are implemented as software processes that are specified as a set of instructions recorded on a computer readable storage medium (also referred to as computer readable medium). When these instructions are executed by one or more processing unit(s) (e.g., one or more processors, cores of processors, or other processing units), they cause the processing unit(s) to perform the actions indicated in the instructions. Examples of computer readable media include, but are not limited to, CD-ROMs, flash drives, RAM chips, hard drives, EPROMs, etc. The computer readable media does not include carrier waves and electronic signals passing wirelessly or over wired connections.

In this specification, the term "software" is meant to include firmware residing in read-only memory or applications stored in magnetic storage, which can be read into memory for processing by a processor. Also, in some examples, multiple software routines can be implemented as sub-parts of a larger program while remaining distinct software processes. In some examples, multiple software processes can also be implemented as separate programs. Finally, any combination of separate programs that together implement a software process described here is within the scope of the discussion herein. In some examples, the software programs, when installed to operate on one or more electronic systems, define one or more specific machine implementations that execute and perform the operations of the software programs.

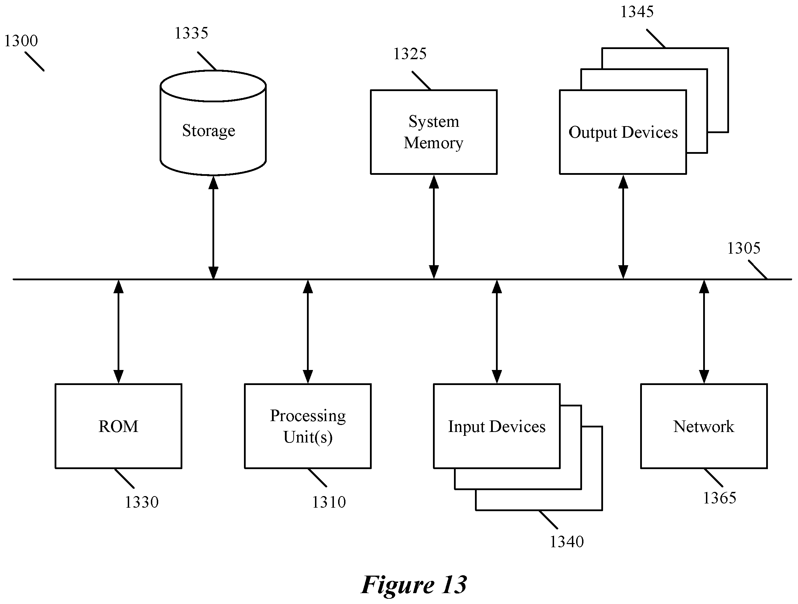

**Figure 13** conceptually illustrates a computer system 1300 with which some examples are implemented. The computer system 1300 can be used to implement any of the above-described hosts, controllers, gateway and edge forwarding elements. As such, it can be used to execute any of the above described processes. This computer system includes various types of non-transitory machine readable media and interfaces for various other types of machine readable media. Computer system 1300 includes a bus 1305, processing unit(s) 1310, a system memory 1325, a read-only memory 1330, a permanent storage device 1335, input devices 1340, and output devices 1345.

The bus 1305 collectively represents all system, peripheral, and chipset buses that communicatively connect the numerous internal devices of the computer system 1300. For instance, the bus 1305 communicatively connects the processing unit(s) 1310 with the read-only memory 1330, the system memory 1325, and the permanent storage device 1335.

From these various memory units, the processing unit(s) 1310 retrieve instructions to execute and data to process in order to execute the processes. The processing unit(s) may be a single processor or a multi-core processor in different examples. The read-only-memory (ROM) 1330 stores static data and instructions that are needed by the processing unit(s) 1310 and other modules of the computer system. The permanent storage device 1335, on the other hand, is a read-and-write memory device. This device is a non-volatile memory unit that stores instructions and data even when the computer system 1300 is off. Some examples use a mass-storage device (such as a magnetic or optical disk and its corresponding disk drive) as the permanent storage device 1335.

Other examples use a removable storage device (such as a floppy disk, flash drive, etc.) as the permanent storage device. Like the permanent storage device 1335, the system memory 1325 is a read-and-write memory device. However, unlike storage device 1335, the system memory is a volatile read-and-write memory, such as random access memory. The system memory stores some of the instructions and data that the processor needs at runtime. In some examples, the processes are stored in the system memory 1325, the permanent storage device 1335, and/or the read-only memory 1330. From these various memory units, the processing unit(s) 1310 retrieve instructions to execute and data to process in order to execute the processes of some examples.

The bus 1305 also connects to the input and output devices 1340 and 1345. The input devices enable the user to communicate information and select commands to the computer system. The input devices 1340 include alphanumeric keyboards and pointing devices (also called "cursor control devices"). The output devices 1345 display images generated by the computer system. The output devices include printers and display devices, such as cathode ray tubes (CRT) or liquid crystal displays (LCD). Some examples include devices such as touchscreens that function as both input and output devices.

Finally, as shown in **Figure 13****,** bus 1305 also couples computer system 1300 to a network 1365 through a network adapter (not shown). In this manner, the computer can be a part of a network of computers (such as a local area network ("LAN"), a wide area network ("WAN"), or an Intranet), or a network of networks (such as the Internet). Any or all components of computer system 1300 may be used as appropriate.

Some examples include electronic components, such as microprocessors, storage and memory that store computer program instructions in a machine-readable or computer-readable medium (alternatively referred to as computer-readable storage media, machine-readable media, or machine-readable storage media). Some examples of such computer-readable media include RAM, ROM, read-only compact discs (CD-ROM), recordable compact discs (CD-R), rewritable compact discs (CD-RW), read-only digital versatile discs (e.g., DVD-ROM, dual-layer DVD-ROM), a variety of recordable/rewritable DVDs (e.g., DVD-RAM, DVD-RW, DVD+RW, etc.), flash memory (e.g., SD cards, mini-SD cards, micro-SD cards, etc.), magnetic and/or solid state hard drives, read-only and recordable Blu-Ray^{®} discs, ultra-density optical discs, any other optical or magnetic media, and floppy disks. The computer-readable media may store a computer program that is executable by at least one processing unit and includes sets of instructions for performing various operations. Examples of computer programs or computer code include machine code, such as is produced by a compiler, and files including higher-level code that are executed by a computer, an electronic component, or a microprocessor using an interpreter.

While the above discussion primarily refers to microprocessor or multi-core processors that execute software, some examples are performed by one or more integrated circuits, such as application specific integrated circuits (ASICs) or field programmable gate arrays (FPGAs). In some examples, such integrated circuits execute instructions that are stored on the circuit itself.

As used in this specification, the terms "computer", "server", "processor", and "memory" all refer to electronic or other technological devices. These terms exclude people or groups of people. For the purposes of the specification, the terms "display" or "displaying" mean displaying on an electronic device. As used in this specification, the terms "computer readable medium," "computer readable media," and "machine readable medium" are entirely restricted to tangible, physical objects that store information in a form that is readable by a computer. These terms exclude any wireless signals, wired download signals, and any other ephemeral or transitory signals.

While the examples have been described with reference to numerous specific details, one of ordinary skill in the art will recognize that these techniques can be embodied in other specific forms. For instance, several of the above-described examples deploy gateways in public cloud datacenters. However, in other examples, the gateways are deployed in a third party's virtual private cloud datacenters (e.g., datacenters that the third party uses to deploy cloud gateways for different entities in order to deploy virtual networks for these entities). Thus, one of ordinary skill in the art would understand that the invention is not to be limited by the foregoing illustrative details, but rather is to be defined by the appended claims.

## Claims

1. A method for proactively optimizing network performance for a software-defined wide area network, SD-WAN, (100) during an active network flow, wherein the SD-WAN (100) connects a plurality of devices (130, 132, 134) operating in a plurality of network segments (120, 122, 124), the method comprising:
monitoring the SD-WAN (100) for network events related to the active network flow;
detecting a particular network event at a first device in a first segment in the SD-WAN (100) traversed by the active network flow; and
based on the particular network event, performing a proactive action on at least a second device in a second network segment in the SD-WAN (100) that will be traversed by the active network flow, wherein the proactive action at the second device mitigates a potential negative impact of the particular network event on the performance of the SD-WAN (100) to improve overall network performance;
wherein each device in the plurality of devices (130, 132, 134) executes an agent, wherein the agents form a communications mesh for sending and receiving network event-related signals; and
wherein detecting the particular network event further comprises, from a first agent executing on the first device, receiving, at the second agent executing on the second device, a signal indicating the particular network event was detected at the first device.

2. The method of claim 1, wherein a central controller (110) collects reactive metrics from each device in the plurality of devices (130, 132, 134) after the proactive action is performed on at least the second device in the second network segment in the SD-WAN (100), wherein the central controller (110) analyzes the collected reactive metrics to identify a corrective action to be performed on the first device in the first network segment, wherein the corrective action further improves overall performance of the SD-WAN (100) and mitigates additional network events on the first device.

3. The method of claim 2, wherein the reactive metrics comprise at least one of loss, delay, and jitter.

4. The method of claim 1, wherein each agent is configured to analyze received network event-related signals for determining whether to perform a proactive action on a device, wherein the second agent i) analyzes the received signal, ii) based on the received signal, determines the proactive action to be performed on the second device, and iii) performs the proactive action on the second device.

5. The method of claim 1, wherein the network event is a device-related network event comprising one of i) poor device performance caused by bad behavior of an application operating on a device, ii) consistent poor performance through an intranet link, and iii) poor network, compute, and memory performance.

6. The method of claim 1, wherein the first network segment is one of a first local area network, LAN, segment and a first wide area network, WAN, segment, wherein the network event comprises one of i) device reboot, ii) a threshold warning from an environmental monitor, and iii) poor network, compute, and memory performance.

7. The method of claim 1, wherein the first network segment is a first wireless LAN, WLAN, segment, and the network event is a WLAN-related network event comprising one of i) device roaming, ii) high interference, iii) software downtime, and iv) poor network, compute, and memory performance.

8. The method of claim 1, wherein the proactive action comprises one of: i) increasing quality of service, QoS, at the second device, ii) selecting an alternate link at the second device for forwarding the active network flow, iii) marking the active network flow as a high priority network flow, iv) duplicating packets of the active network flow, and v) proactively caching packets for the first device.

9. The method of claim 1 further comprising performing the proactive action on at least the second device in the second network segment and a third device in a third network segment, wherein the second device is a switch (840) of a LAN segment and the third device is an SD-WAN edge device (830) of a WAN segment, wherein the proactive action comprises increasing quality of service, QoS, for the active network flow at the switch (840) and at the SD-WAN edge device (830).

10. The method of claim 1, wherein when i) the first network segment is one of a first LAN segment and a first WLAN segment and ii) the particular network event indicates poor outbound performance, the second device comprises an SD-WAN edge device (830).

11. The method of claim 1, wherein when i) the first network segment is one of a first LAN segment and a first WLAN segment and ii) the particular network event indicates poor inbound and outbound performance on the LAN, the second device comprises a switch (840).

12. The method of claim 1, wherein when the first network segment is a first WAN segment and the particular network event indicates poor outbound performance, the second device comprises a switch (840).

13. The method of claim 1, wherein the first network segment is located at a first site and the second network segment is located at a second site, wherein the performance of the SD-WAN (100) comprises one of i) performance of the SD-WAN (100) at the second site, and ii) overall performance of the SD-WAN (100) including performance of the SD-WAN (100) at the first and second sites.

14. An electronic device comprising:
a set of processing units; and
a machine readable medium storing a program which when implemented by at least one of the processing units implements the method according to any one of claims 1-13.

15. A system comprising means for implementing the method according to any one of claims 1-13.

## Patentansprüche

1. Ein Verfahren zum proaktiven Optimieren einer Netzwerkperformance für ein softwaredefiniertes Weitverkehrsnetzwerk, SD-WAN, (100) während eines aktiven Netzwerkflusses, wobei das SD-WAN (100) eine Mehrzahl von Vorrichtungen (130, 132, 134) verbindet, die in einer Mehrzahl von Netzwerksegmenten (120, 122, 124) arbeiten, wobei das Verfahren aufweist:
Überwachen des SD-WAN (100) auf Netzwerkereignisse, die sich auf den aktiven Netzwerkfluss beziehen;
Detektieren eines bestimmten Netzwerkereignisses an einer ersten Vorrichtung in einem ersten Segment in dem SD-WAN (100), das von dem aktiven Netzwerkfluss durchquert wird; und
basierend auf dem bestimmten Netzwerkereignis, Durchführen einer proaktiven Aktion an zumindest einer zweiten Vorrichtung in einem zweiten Netzwerksegment in dem SD-WAN (100), das von dem aktiven Netzwerkfluss durchquert wird, wobei die proaktive Aktion an der zweiten Vorrichtung eine potentielle negative Auswirkung des bestimmten Netzwerkereignisses auf die Performance des SD-WAN (100) abschwächt, um eine Gesamtnetzwerkperformance zu verbessern;
wobei jede Vorrichtung in der Mehrzahl von Vorrichtungen (130, 132, 134) einen Agenten ausführt, wobei die Agenten ein Kommunikationsnetz zum Senden und Empfangen von Netzwerkereignis-bezogenen Signalen bilden; und
wobei das Detektieren des bestimmten Netzwerkereignisses weiter aufweist, von einem ersten Agenten, der auf der ersten Vorrichtung ausführt, Empfangen, an dem zweiten Agenten, der auf der zweiten Vorrichtung ausführt, eines Signals, das anzeigt, dass das bestimmte Netzwerkereignis an der ersten Vorrichtung detektiert wurde.

2. Das Verfahren gemäß Anspruch 1, wobei ein zentraler Controller (110) reaktive Metriken von jeder Vorrichtung in der Mehrzahl von Vorrichtungen (130, 132, 134) sammelt, nachdem die proaktive Aktion an zumindest der zweiten Vorrichtung in dem zweiten Netzwerksegment in dem SD-WAN (100) durchgeführt wurde, wobei der zentrale Controller (110) die gesammelten reaktiven Metriken analysiert, um eine Korrekturaktion zu identifizieren, die an der ersten Vorrichtung in dem ersten Netzwerksegment durchzuführen ist, wobei die Korrekturaktion weiter die Gesamtperformance des SD-WAN (100) verbessert und zusätzliche Netzwerkereignisse an der ersten Vorrichtung abschwächt.

3. Das Verfahren gemäß Anspruch 2, wobei die reaktiven Metriken zumindest eines von Verlust, Verzögerung und Jitter aufweisen.

4. Das Verfahren gemäß Anspruch 1, wobei jeder Agent konfiguriert ist, um empfangene Netzwerkereignis-bezogene Signale zu analysieren, um zu bestimmen, ob eine proaktive Aktion an einer Vorrichtung durchzuführen ist, wobei der zweite Agent i) das empfangene Signal analysiert, ii) basierend auf dem empfangenen Signal, die proaktive Aktion bestimmt, die an der zweiten Vorrichtung durchzuführen ist, und iii) die proaktive Aktion an der zweiten Vorrichtung durchführt.

5. Das Verfahren gemäß Anspruch 1, wobei das Netzwerkereignis ein vorrichtungsbezogenes Netzwerkereignis ist, das eines aufweist von i) einer schlechten Vorrichtungsperformance, die durch ein schlechtes Verhalten einer Anwendung verursacht wird, die auf einer Vorrichtung arbeitet, ii) einer konsistenten schlechten Performance durch eine Intranetverbindung, und iii) einer schlechten Netzwerk-, Rechen- und Speicherperformance.

6. Das Verfahren gemäß Anspruch 1, wobei das erste Netzwerksegment eines ist von einem ersten lokalen Netzwerk-, LAN-, Segment und einem ersten Weitverkehrsnetzwerk-, WAN-, Segment, wobei das Netzwerkereignis eines aufweist von i) einem Vorrichtungsneustart, ii) einer Schwellenwertwarnung von einer Umgebungsüberwachungseinrichtung, und iii) einer schlechten Netzwerk-, Rechen- und Speicherperformance.

7. Das Verfahren gemäß Anspruch 1, wobei das erste Netzwerksegment ein erstes drahtloses LAN-, WLAN-, Segment ist, und das Netzwerkereignis ein WLAN-bezogenes Netzwerkereignis ist, das eines aufweist von i) einem Vorrichtungsroaming, ii) einer hohen Interferenz, iii) einer Softwareausfallzeit, und iv) einer schlechten Netzwerk-, Rechen- und Speicherperformance.

8. Das Verfahren gemäß Anspruch 1, wobei die proaktive Aktion eines aufweist von: i) Erhöhen einer Dienstqualität, QoS, an der zweiten Vorrichtung, ii) Auswählen einer alternativen Verbindung an der zweiten Vorrichtung zum Weiterleiten des aktiven Netzwerkflusses, iii) Markieren des aktiven Netzwerkflusses als einen Netzwerkfluss mit hoher Priorität, iv) Duplizieren von Paketen des aktiven Netzwerkflusses, und v) proaktives Zwischenspeichern von Paketen für die erste Vorrichtung.

9. Das Verfahren gemäß Anspruch 1, das weiter aufweist ein Durchführen der proaktiven Aktion an zumindest der zweiten Vorrichtung in dem zweiten Netzwerksegment und einer dritten Vorrichtung in einem dritten Netzwerksegment, wobei die zweite Vorrichtung ein Switch (840) eines LAN-Segments ist und die dritte Vorrichtung eine SD-WAN-Randvorrichtung (830) eines WAN-Segments ist, wobei die proaktive Aktion ein Erhöhen einer Dienstqualität, QoS, für den aktiven Netzwerkfluss an dem Switch (840) und an der SD-WAN-Randvorrichtung (830) aufweist.

10. Das Verfahren gemäß Anspruch 1, wobei, wenn i) das erste Netzwerksegment eines ist von einem ersten LAN-Segment und einem ersten WLAN-Segment, und ii) das bestimmte Netzwerkereignis eine schlechte abgehende Performance anzeigt, die zweite Vorrichtung eine SD-WAN-Randvorrichtung (830) aufweist.

11. Das Verfahren gemäß Anspruch 1, wobei, wenn i) das erste Netzwerksegment eines ist von einem ersten LAN-Segment und einem ersten WLAN-Segment, und ii) das bestimmte Netzwerkereignis eine schlechte eingehende und abgehende Performance auf dem LAN anzeigt, die zweite Vorrichtung einen Switch (840) aufweist.

12. Das Verfahren gemäß Anspruch 1, wobei, wenn das erste Netzwerksegment ein erstes WAN-Segment ist und das bestimmte Netzwerkereignis eine schlechte abgehende Performance anzeigt, die zweite Vorrichtung einen Switch (840) aufweist.

13. Das Verfahren gemäß Anspruch 1, wobei sich das erste Netzwerksegment an einem ersten Standort befindet und sich das zweite Netzwerksegment an einem zweiten Standort befindet, wobei die Performance des SD-WAN (100) eines aufweist von i) Performance des SD-WAN (100) an dem zweiten Standort, und ii) Gesamtperformance des SD-WAN (100) einschließlich Performance des SD-WAN (100) an dem ersten und zweiten Standort.

14. Eine elektronische Vorrichtung, aufweisend:
einen Satz von Verarbeitungseinheiten; und
ein maschinenlesbares Medium, das ein Programm speichert, das, wenn es durch zumindest eine der Verarbeitungseinheiten implementiert wird, das Verfahren gemäß einem der Ansprüche 1 - 13 implementiert.

15. Ein System, das Mittel aufweist zum Implementieren des Verfahrens gemäß einem der Ansprüche 1 - 13.

## Revendications

1. Procédé d'optimisation proactive de performance de réseau pour un réseau étendu défini par logiciel, SD-WAN, (100) pendant un flux de réseau actif, dans lequel le SD-WAN (100) connecte une pluralité de dispositifs (130, 132, 134) fonctionnant dans une pluralité de segments de réseau (120, 122, 124), le procédé comprenant les étapes consistant à :
surveiller le SD-WAN (100) pour des événements de réseau liés au flux de réseau actif ;
détecter un événement de réseau particulier au niveau d'un premier dispositif dans un premier segment dans le SD-WAN (100) traversé par le flux de réseau actif ; et
sur la base de l'événement de réseau particulier, effectuer une action proactive sur au moins un deuxième dispositif dans un deuxième segment de réseau dans le SD-WAN (100) qui va être traversé par le flux de réseau actif, dans lequel l'action proactive au niveau du deuxième dispositif atténue un impact négatif potentiel de l'événement de réseau particulier sur la performance du SD-WAN (100) pour améliorer la performance de réseau globale ;
dans lequel chaque dispositif de la pluralité de dispositifs (130, 132, 134) exécute un agent, dans lequel les agents forment un maillage de communications pour envoyer et recevoir des signaux liés à un événement de réseau ; et
dans lequel la détection de l'événement de réseau particulier comprend en outre, à partir d'un premier agent s'exécutant sur le premier dispositif, la réception, au niveau du second agent s'exécutant sur le deuxième dispositif, d'un signal indiquant que l'événement de réseau particulier a été détecté au niveau du premier dispositif.

2. Procédé selon la revendication 1, dans lequel un dispositif de commande central (110) collecte des métriques réactives à partir de chaque dispositif de la pluralité de dispositifs (130, 132, 134) après que l'action proactive soit effectuée sur au moins le deuxième dispositif dans le deuxième segment de réseau dans le SD-WAN (100), dans lequel le dispositif de commande central (110) analyse les métriques réactives collectées pour identifier une action corrective à effectuer sur le premier dispositif dans le premier segment de réseau, dans lequel l'action corrective améliore encore la performance globale du SD-WAN (100) et atténue des événements de réseau supplémentaires sur le premier dispositif.

3. Procédé selon la revendication 2, dans lequel les métriques réactives comprennent au moins une des métriques suivantes : perte, retard et gigue.

4. Procédé selon la revendication 1, dans lequel chaque agent est configuré pour analyser des signaux liés à un événement de réseau reçus afin de déterminer s'il faut effectuer une action proactive sur un dispositif, dans lequel le second agent i) analyse le signal reçu, ii) sur la base du signal reçu, détermine l'action proactive à effectuer sur le deuxième dispositif, et iii) effectue l'action proactive sur le deuxième dispositif.

5. Procédé selon la revendication 1, dans lequel l'événement de réseau est un événement de réseau lié à un dispositif comprenant une certaine parmi i) une mauvaise performance de dispositif causée par un mauvais comportement d'une application fonctionnant sur un dispositif, ii) une mauvaise performance constantes via une liaison intranet, et iii) une mauvaise performance de réseau, de calcul et de mémoire.

6. Procédé selon la revendication 1, dans lequel le premier segment de réseau est un parmi un premier segment de réseau local, LAN, et un premier segment de réseau étendu, WAN, dans lequel l'événement de réseau comprend un certain parmi i) un redémarrage de dispositif, ii) un avertissement de seuil provenant d'un moniteur environnemental, et iii) une mauvaise performance de réseau, de calcul et de mémoire.

7. Procédé selon la revendication 1, dans lequel le premier segment de réseau est un premier segment de LAN sans fil, WLAN, et l'événement de réseau est un événement de réseau lié à un WLAN comprenant une certaine parmi i) une itinérance de dispositif, ii) une interférence élevée, iii) un temps d'arrêt de logiciel, et iv) une mauvaise performance de réseau, de calcul et de mémoire.

8. Procédé selon la revendication 1, dans lequel l'action proactive comprend une certaine des étapes consistant à : i) augmenter la qualité de service, QoS, au niveau du deuxième dispositif, ii) sélectionner une liaison alternative au niveau du deuxième dispositif pour transmettre le flux de réseau actif, iii) marquer le flux de réseau actif comme un flux de réseau de haute priorité, iv) dupliquer des paquets du flux de réseau actif, et v) mettre en cache de manière proactive des paquets pour le premier dispositif.

9. Procédé selon la revendication 1, comprenant en outre l'exécution de l'action proactive sur au moins le deuxième dispositif dans le deuxième segment de réseau et un troisième dispositif dans un troisième segment de réseau, dans lequel le deuxième dispositif est un commutateur (840) d'un segment de LAN et le troisième dispositif est un dispositif périphérique de SD-WAN (830) d'un segment de réseau WAN, dans lequel l'action proactive comprend une augmentation de la qualité de service, QoS, pour le flux de réseau actif au niveau du commutateur (840) et au niveau du dispositif périphérique de SD-WAN (830).

10. Procédé selon la revendication 1, dans lequel lorsque i) le premier segment de réseau est l'un d'un premier segment de LAN et d'un premier segment de WLAN et ii) l'événement de réseau particulier indique une mauvaise performance de sortie, le deuxième dispositif comprend un dispositif périphérique de SD-WAN (830).

11. Procédé selon la revendication 1, dans lequel lorsque i) le premier segment de réseau est l'un d'un premier segment de LAN et d'un premier segment de WLAN et ii) l'événement de réseau particulier indique une mauvaise performance d'entrée et de sortie sur le réseau local, le deuxième dispositif comprend un commutateur (840).

12. Procédé selon la revendication 1, dans lequel lorsque le premier segment de réseau est un premier segment de WAN et que l'événement de réseau particulier indique une mauvaise performance de sortie, le deuxième dispositif comprend un commutateur (840).

13. Procédé selon la revendication 1, dans lequel le premier segment de réseau est situé au niveau d'un premier site et le deuxième segment de réseau est situé au niveau d'un second site, dans lequel la performance du SD-WAN (100) comprend une certaine parmi i) une performance du SD-WAN (100) au niveau du second site, et ii) une performance globale du SD-WAN (100) comprenant une performance du SD-WAN (100) au niveau des premier et second sites.

14. Dispositif électronique, comprenant :
un ensemble d'unités de traitement ; et
un support lisible par machine stockant un programme qui, lorsqu'il est mis en œuvre par au moins une des unités de traitement, met en œuvre le procédé selon l'une quelconque des revendications 1 à 13.

15. Système comprenant des moyens pour mettre en œuvre le procédé selon l'une quelconque des revendications 1 à 13.
